# EUROPEAN PATENT SPECIFICATION

(11) **EP 1 287 055 B1**
(45) Date of publication and mention of the grant of the patent: **06.01.2010**
(21) Application number: 01933188.3
(22) Date of filing: 08.05.2001
(51) Int. Cl.: C08G 59/18, C09D 163/00, C08J 3/24, C09D 5/03

(54) **POWDER COMPOSITIONS FOR HEAT SENSITIVE SUBSTRATES**
PULVERBESCHICHTUNGEN FÜR WÄRMEEMPFINDLICHE SUBSTRATE
COMPOSITIONS EN POUDRE POUR SUBSTRATS THERMOSENSIBLES

(30) Priority: 26.05.2000 US 579621; 08.05.2001 US 850814
(43) Date of publication of application: 05.03.2003
(73) Proprietor: Valspar Sourcing, Inc., Minneapolis, MN 55440 (US)
(72) Inventor: HART, Stephen, C., Hudson, WI 54016 (US); SCHMIERER, Jeffrey, G., Oakdale, MN 55128 (US); CARLSON, Brian, W., Woodbury, MN 55125 (US); LARSON, Stephen, C., St. Paul, MN 55106 (US)
(74) Representative: Smaggasgale, Gillian Helen
(86) International application number: PCT/US2001/014818
(87) International publication number: WO 2001/092367

(56) References cited:
- EP-A- 0 600 546
- DE-A- 3 545 061
- DE-A- 19 622 921
- US-A- 4 990 587
- US-A- 5 244 944

## Description

### Field of the Invention

The invention relates to new thermosetting powder coating compositions. Specifically, the invention relates to new acid functional acrylic/polyepoxy powder coating compositions. More specifically, the invention relates to new acid functional acrylic /polyepoxy powder coating compositions for coatings on heat sensitive substrates such as wood substrates to produce thereon by a low temperature cure or a fast cure at higher temperature a finish with high hardness and/or controllable gloss.

### Background of the Invention

It is well known that powder coating is a low polluting, cost effective method to provide high quality finishes on substrates such as metal substrates and therefore, is used more and more to replace liquid finishing in various industries. Traditionally, powder coatings are used to coat metal objects, e.g., in the automotive and appliance industries. Metal objects are very good electric conductors and can be heated to high temperature. Thus, conventional powder coating compositions are easily applied onto metal substrates by any of the electrostatic deposition techniques known in the art to form a fine finish. The coated metal substrates are normally cured at elevated temperatures ranging from 300° F to 450° F from 148.9 to 232.2°C. Since high temperatures do not significantly distort metal substrates, heat sensitivity of the work piece is generally not a concern. There have been well developed in the art powder coating compositions that are cured at high temperatures to provide high performance coatings on metal substrates.

More recently, efforts have been made to apply powder coatings to non-metal substrates, known as heat sensitive substrates, e.g., plastics, preassembled products and wood products. Examples of wood products include household furniture, office furniture, and construction components such as doors, siding, window frames, shelving and molding. While some plastic articles may be manufactured with the appropriate color and may not need coatings, some other plastic products and especially many wood products must be coated for decorative or protective purpose or both. Although some success has been achieved in coating non-metal substrates, problems remain, especially with coatings on wood substrates due to the distinct natural difference between metal substrates and wood substrates.

Naturally, wood substrates contain more moisture and volatile compounds. The moisture and the volatile compounds are readily released as gases during the relatively long cure at high temperature associated with traditional powder coatings on metal substrates. This outgassing disrupts the surface of the coating material, resulting in pinholes and other defects in the coating surface, thereby damaging the appearance of the coating. Therefore, conventional cure at high temperature for a relatively long time is not usable for coating powders on wood substrates. Presently, one approach to avoid pinhole and defects in the coating surface is to provide a textured coating having, e.g., a grainy texture, or a coating with an orange peel appearance that masks the underlying non-uniformity of the substrate. Another approach to eliminate outgassing is to develop a low temperature cure coating powder system to lower the cure temperature and/or to shorten the cure time. However, the lower the cure temperature and/or the shorter the cure time are, the more difficult it is to achieve high performance. Likewise, the lower the cure temperature and/or the shorter the cure time are, the more difficult it is to control gloss, especially to achieve aesthetically desired low gloss. Furthermore, the lower the cure temperature and/or the shorter the cure time are, the more difficult it is to process the powder coatings as traditional process temperatures are in the same range as the targeted cure temperatures. Achieving high performance coatings as defined by toughness and durability tests like hardness, scratch, mar, chemical resistance and impact can be challenging with traditional coating powders cured at high temperatures for a longer time. Again the challenge becomes greater as the cure temperature is lowered or the cure time is shortened.

Various powder coating compositions used on either or both metal and wood substrates in the relevant art are described in the patent literature.

U.S. Pat. No. 6,022,927 discloses an acrylic powder coating composition used on metal and wood substrates. The composition contains basically an acid functional acrylic resin; an adduct of an acid functional polyester and a polyepoxy (e.g., triglycidylisocyanurate (TGIC)); and a curing agent that is also TGIC to provide orange peel textured surfaces on both metal and wood substrates. It is specifically taught that a coating powder prepared by simply mixing the carboxyl functional acrylic resin, the curing agent (TGIC) and the polyester does not provide a coating with desired physical properties. Only if the curing agent (TGIC) and the polyester are adducted prior to forming the coating powder, can the coating with desired properties be produced. The cure temperature may be reduced to 300° F 148.9 °C or below upon addition of a cure catalyst. 60 ° gloss tested on metal substrate is higher than 75. Pencil Hardness of the coating surface, tested on metal panel, is from F to 2H.

U.S. Pat. No. 5,907,020 discloses a thermosetting powder coating system, based on a mixture of an extrudate of a catalyzed self-curing epoxy resin and a low temperature curing agent. The epoxy resin is first extruded with a catalyst, then the extrudate is mixed with a low temperature curing agent to form the coating powders. The low temperature curing agent is an epoxy adduct of an imidazole catalyst or an epoxy adduct of an aliphatic polyamine, to provide low gloss coatings on metal and wood substrates. The cure temperature may be 290° F 143.3°C or below. 60 ° gloss tested on steel panel varies from 15 to 80.

U.S. Pat. No. 5,721,052 discloses a thermosetting powder coating composition based on Bisphenol A type of epoxies, an imidazole catalyst and a texturing agent, for forming a grainy textured finish on both metal and wood substrates. The cure temperature may be about 350° F about 136.7°C or below. 60° gloss tested on metal panel is below 6. Pencil Hardness, tested on metal panels, is from H to 2H.

All the powder coating compositions disclosed, however, do not provide coatings on heat sensitive substrates, especially wood substrates with the advantageous combination of low cure or fast cure, controllable gloss, and high hardness.

Therefore, there is a need for a new powder coating composition that can be coated by means of traditional powder coating application methods on heat sensitive substrates, especially wood substrates and cured either at

According to the present invention, there is provided a powder coating composition comprising (a) 10% to 40% by weight, relative to (a) plus (b), of carboxylic acid functional acrylic resin(s); (b) 60% to 90% by weight, relative to (a) plus (b), of polyepoxy resin(s); and (c) a catalyst in an amount sufficient to cure the composition at a temperature of 300°F (148.9°C) or below for 30 minutes or less, wherein the composition provides a finish having a pencil hardness of at least 3H.

The catalyst is preferably selected from the group consisting of imidazoles, imidazole/epoxy adducts, tertiary amines, imidazolines, imidazoline salts of mono- or di-carboxylic acids, tetraalkylammonium salts, phosphonium salts, and mixtures thereof.

### Detailed Description of the Invention

For the purpose of the invention, the term "wood" is defined as including natural wood and engineered wood such as plywood, particleboard, oriented strand board, hardboard, medium density fiberboard, and the like. The particleboard may be standard or treated to enhance its electrical conductivity. Wood, pre-coated with a conductive liquid coating composition and cured, may also be used as a substrate for the purpose of the invention. Wood having moisture content of from 3 to 10 % by weight is preferred.

For the purpose of the invention, "reduced or low cure temperature" refers to a substrate surface temperature, also known as part temperature, that is 300° F [about 148.9°C] or below to achieve desired performance, as compared to the traditional high cure temperature of higher than 300° F [148.9°C] to 450° F [about 232.2°C].

For the purpose of the invention, "fast cure" refers to a cure that is carried out at a fast cure temperature, which refers to a substrate surface temperature, also known as part temperature, that can be as high as the traditional cure temperature, but the cure time is shorter than that required for curing the traditional powder coating systems in order to achieve the desired performance.

The thermosetting powder coating compositions of the invention include carboxylic acid functional acrylic resin(s). The carboxylic acid functional acrylic resins useful in the invention are formed from typical acrylic monomers known in the art, such as acrylic acid or methacrylic acid; acrylic acid derivatives such as methyl acrylate, ethyl acrylate, propyl acrylate, isopropyl acrylate, butyl acrylate, isobutyl acrylate, 2-ethylhexyl acrylate, isooctylacrylate, dodecyl acrylate, stearyl acrylate, cyclohexyl acrylate, benzyl acrylate, hydroxyethyl acrylate, hydroxypropyl acrylate, hydroxybutyl acrylate, 1,4-butanediol monoacrylate and dimethylaminoethyl acrylate; methacrylic acid derivatives such as methyl methacrylate, ethyl methacrylate, propyl methacrylate, isopropyl methacrylate, butyl methacrylate, isobutyl methacrylate, isooctyl methacrylate. 2-ethylhexyl methacrylate, dodecyl methacrylate, steary methacrylate, cyclohexyl methacrylate, benzyl methacrylate, phenyl methacrylate, hydroxyethyl methacrylate, hydroxylpropyl methacrylate, hydroxybutyl methacrylate, 1,4-butanediol monomethacrylate and dimethylaminoethyl methacrylate. Such monomers may be used each separately or in the combination of two or more. Other monomers such as styrene, substituted styrene, or vinyl toluene, may also be incorporated. Commercially available examples of the carboxylic acid functional acrylic resins include, e.g., those sold under the trademark designation SCX™ acrylic resins by S. C. Johnson.

According to the invention, carboxylic acid functional acrylic resins may be used separately or in combination of two or more in the powder coating composition of the invention. In some embodiments, the composition comprises 10% to 40% by weight of the carboxylic acid functional acrylic resin(s), based on the total weight of resins used in the powder coating composition of the invention.

The powder coating composition of the invention also includes polyepoxy resin(s). A wide variety of polyepoxy resins including non-crystalline polyepoxy resins and crystalline polyepoxy resins may be used in the powder coating compositions of the invention. Typically, the polyepoxy resins should have at least two epoxy groups per molecule, including saturated or unsaturated, aliphatic, cycloaliphatic or heterocyclic compounds and may be substituted with substituents such as halogen atoms, alkyl groups, and ether groups, Suitable polyepoxy resins include glycidyl ethers of aromatic and aliphatic polyols, cycloaliphatic polyepoxides, epoxy-functional acrylic resins, heterocyclic polyepoxides, glycidyl esters of aromatic and aliphatic polycarboxylic acids, glycidyl polyamines and ether amines, and mixtures thereof. For example, the polyepoxy resins may be solid epoxy resins based on bisphenol A (2,2'-bis(p-hydroxyphenyl)propane) and epichlorohydrin, i.e., the diglycidyl ether of bisphenol A and higher addition products thereof. The polyepoxy resins may include solid epoxy resins based on bisphenol F (4,4'-dihydroxydiphenylmethane), saturated bisphenol A (2,2'bis(4-hydroxycyclohexyl)propane) and epichlorohydrin and higher addition products. Also included are epoxy resins made by the reaction of epichlorohydrin with a novolac resin. A novolac resin is a condensate of a phenol compound with formaldehyde in the presence of acid catalysts. The phenol compound can be phenol itself, or compounds such as cresols, xylenols, resorcinol, and naphthols. The epoxy resins are available from a wide variety of commercial sources under the trademark designation such as EPON™ or Epikote™ from Resolution Performance Products (Houston, TX), Araldite™ from Vantico (Hawthome, NY) and DER from Dow Chemical Company (Midland, MI). Commercially available epoxy resins include Epikote™ 1001, Epikote™ 1002, Epikote™1004, Epikote™ 1007, and Epikote™1009 from Resolution Performance Products; Epo-Thoto YD-012 from KUKDO Chemical Ind. Co., Ltd.; DER™ 642 and DER™ 672 from Dow Chemical Co.; Araldite™ 7220, Araldite™ ECN 1235, Araldite™ ECN 1273, and Araldite™ ECN 1280 from Vantico. Other useful epoxy resins include bisphenol S epoxy resins; hydrogenated bisphenol A epoxy resins. Polyepoxy resins based on bisphenol A are preferred from among the polyglycidyl ethers of aromatic polyols. Useful heterocyclic polyepoxides include1,3,5-tris (2,3-glycidyl-propyl) 1,3,5-triazine-2,4,6-(1H,3H,5H)-trione known as triglycidyl isocyanurate (TGIC), 1,3,5-tris (2,3-glycidyl-2-methyl propyl) 1,3,5-triazine-2,4,6-(1H,3H,5H)-trione, the diglycidyl ester of terephthalic acid and the triglycidyl ester of trimellitic acid. Commercially available heterocyclic polyepoxides include Araldite™ PT-810 from Vantico and MT-239 from Nissan Chemical; and glycidyl esters include PT-910 from Vantico. Other useful crystalline polyepoxides include tetramethylbisphenol diglycidyl ether, bisphenol S diglycidyl ether, 2,5-di-t-butylbenzene-1,4-diglycidyl ether, hydroquinone diglycidyl ether, 2,5-di-t-butylhydroquinone diglycidyl ether, diglycidyl isophthalate, and epoxypropoxydimethylbenzyl acrylamide. Commercially available crystalline polyepoxy resins include Epoxy Research Resin RSS-1407 from Revolution Performance Products, EPO-THOTO YDC-1312 from KUKDO Chemical Ind., Co., Ltd. Suitable epoxy functional acrylic resins may be produced by polymerizing epoxy functional acrylates alone or in combination with other vinyl monomers, including other acrylic esters, styrene and substituted styrenes, as specified before. Examples of epoxy functional acrylate monomers include glycidyl acrylate, glycidyl methacrylate, beta-methylglycidyl acrylate, beta-methylglycidyl methacrylate, and N-glycidyl acrylic acid amide, among which glycidyl acrylate and glycidyl methacrylate are preferred. Examples of commercially available epoxy functional acrylic resins include Fineclad™A-244-A by Reichhold, Almatex™ PD 7690 by Anderson Co. and GMA 300™ by Estron Chemical Company.

The polyepoxy resins may be used separately or in combination of two or more in the powder coating compositions of the invention. For example, one bisphenol A type of polyepoxy resin may be used alone or in combination with other bispenol A type of polyepoxy resin or with novolac type of polyepoxy resins. Likewise, bisphenol A type of polyepoxy resins may be used in combination with triglycidyl isocyanurate and/or with epoxy functional acrylic resins. Also; non-crystalline polyepoxy resin(s) may be used in combination with crystalline polyepoxy resin(s).

The powder coating composition of the invention comprises 60% to 90% by weight of the polyepoxy resin(s), based on total weight of resins used in the powder coating composition of the invention.

In the embodiments wherein the crystalline polyepoxy resin(s) are used in combination with non-crystalline polyepoxy resin(s), the crystalline polyepoxy resin(s) may be present in an amount of from 2 % to 15% by weight, based on the total weight of the polyepoxy resins.

The powder coating compositions of the invention may also include catalyst(s) that allow the powder coating to cure either at a low cure temperature of no greater than 300° F about 148.9 °C, preferably, no greater than 280° F [about 137.8°C] or at a fast cure temperature for as short time as possible to minimize the temperature build up within the substrates. Examples of the useful catalysts may include imidazoles, imidazole/epoxy adducts, tertiary amines, imidazolines, imidazoline salts of mono- or di-carboxylic acids, tetraalkylammonium salts, phosphonium salts, tin catalysts e.g., stannous octoate, and mixtures thereof. Examples of imidazoles may include substituted and unsubstituted imidazoles, such as imidazole, 2-methylimidazole, and 2-phenylimidazole. Examples of imidazole/epoxy adducts can be commercially available under the trade designation EPON P-101 from Resolution Performance Products and under the trade designation XU HT 261 from Vantico. Examples of tetraalkylammonium salts may include tetramethylammonium bromides, tetramethylammonium iodides, tetramethylammonium chlorides, myrystyltrimethylammonium bromides, myrystyltrimethylammonium iodides, myrystyltrimethylammonium chlorides, and the like. Examples of phosphonium salts may include ethyltriphenylphosphonium bromides, ethyltriphenylphosphonium iodides and ethyltriphenylphosphonium chlorides. Examples of tertiary amines may include N,N-dimethylcyclohexylamine, N,N-dimethylaniline, N-methylmorpholine, N,N'-dimethylpiperazine, 2,2,6,6,-tetramethyl-4-dimethylaminopiperidine, N,N-dimethyloctadecylamine, N,N-dimethylhexadecylamine, 1,8-diazabicyclo[5.4.0]undec-7-ene, N,N,N',N'-tetramethylhexamethylenediamine, N,N,N',N', N"-pentamethyldiethylenetriamine, triethylenediamine and benzyldimethylamine. Examples of imidazolines include substituted and unsubstituted imidazolines, such as 2-phenylimidazoline. Imidazoline salts of mono- or di-carboxylic acids are derived from imidazoline-based compounds and mono- or di-carboxylic acids. Suitable monocarboxylic acids and dicarboxylic acids have one or two carboxylic acid groups (-COOH) per molecule respectively. They include aromatic and aliphatic (saturated and unsaturated) acids and combinations thereof (i.e., araliphatic). Typical monocarboxylic acids or dicarboxylic acids include, but are not limited to, terephthalic acid, isophthalic acid, phthalic acid, benzoic acid, azelaic acid, adipic acid, succinic acid, glutaric acid, pimelic acid, suberic acid, sebacic acid, decanedicarboxylic add, dodecanedicarboxylic acid, acetic acid, 2-ethyhexanoic acid and maleic acid. Preferred mono- and di-carboxylic acids are adipic acid, sebacic acid and dodecanedioic acid.

Imidazoline-based compound such as a 2-imidazoline compound may be represented by the following general structure: 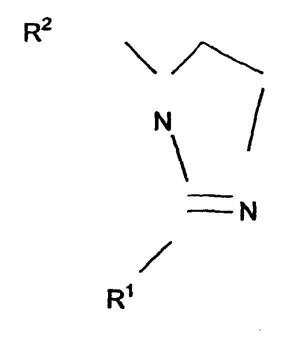 wherein R¹ is hydrogen, an aromatic group, an aliphatic group (saturated or unsaturated), cycloaliphatic or an araliphatic group, preferably having about 1-12 carbon atoms. Examples of R¹ include phenyl, 2-chlorophenyl, 2-hydroxyphenyl, 4-chlorophenyl, 4-methyl phenyl, and the like, alkyl, such as methyl, or undecyl, aralkyl, such as benzyl, or hydrogen. R² is hydrogen or an alkyl group, preferably having about 1 to 12 carbon atoms, such as methyl.

Typically, 2-imidazolines include 2-phenyl-2-imidazoline, 2-(2-hydroxyphenyl)-2-imidazoline, 2-(2-chlorophenyl)-2-imidazoline, 2-(4-chlorophenyl)-2-imidazoline, 2-(4-methylphenyl)-2-imidazoline, 2-n-undecyl-2-imidazoline, 2-benzyl-2-imidazoline, 4,4-dimethyl-2-imidazoline, and 2-methyl-2-imidazoline. The imidazoline salts of mono- or di-carboxylic acids and their preparations are described, for example, in GB 2,312,897.

The powder coating composition of the invention can be formulated to include at least one catalyst in an amount sufficient to cure the composition. Preferably, the catalyst is present in an amount sufficient to cure the composition either at a low cure temperature of no greater than 300° F [148.9°C] for a relatively longer period, such as 30 minutes or less,

Preferably, the catalyst is present in an amount of from 0.1 to 10.0 pphr (parts per hundred resin), more preferably, from 0.5 to 5 pphr, and most preferably, from 1.0 to 4.0 pphr.

In another aspect of the invention, the powder coating compositions may comprise a first catalyst to function primarily as an epoxy homopolymerization catalyst and a second catalyst to function primarily as an epoxy/carboxylic acid reaction catalyst. Examples of useful first catalysts may include imidazoles, imidazole/epoxy adducts, tertiary amines, and mixtures thereof. Examples of useful second catalysts may include imidazolines, imidazoline salts of mono- or di-carboxylic acids, tertiary amines, tetraalkylammonium salts, phosphonium salts, and mixtures thereof.

Although not bounded by any theory, it is believed that an imidazole adducts to epoxy resin by opening an epoxy ring. The adducted imidazole acts as a catalyst that facilitates further epoxy ring opening, thereby promoting the homopolymerization of the epoxide groups. On the other hand, an imidazoline based catalyst may promote addition reactions between the epoxide groups and the carboxylic acid groups, thereby further reducing the cure temperature.

The powder coating compositions of the invention can be formulated such that, by adjusting the amounts and ratios of the catalysts, the coatings can be cured either at a low cure temperature such as at 300° F [148.9°C] or below, preferably at 280° F [137.8°C] or below.

Optionally, the powder coating compositions of the invention may contain other additives that are common to powder coatings. These additives include, without limitation, fillers, slip additives, pigments, dyes, UV stabilizers, antioxidants, fluidizing agents, flow control agents, degassing agents, flexibilizing agents, texturing agents, and mixtures thereof. For example, flow control agents such as an acrylic compound, e.g., Modaflow 2000 or Resiflow P-67, or a silicon compound are known in the coating or powder coating art and are generally incorporated into the powder coating compositions to improve the surface tension, thereby facilitating the flow of the polymers as they are melted to provide a smoother finish of the final solid coatings. Flexibilizing agents such as solid plasticizers, core/shell materials, rubber, hydroxyl or acid functional polyester, styrene/maleic anhydride and polyanhydride resins are used to provide a finish with more flexibility. Examples of useful plasticizers may include sucrose benzoate, pentaerythritol tetrabenzoate and cyclohexanedimethanol dibenzoate. Examples of useful rubbers may include natural and most synthetic rubbers, such as styrenebutadiene and acrylonitrile-butadiene polymers. Examples of useful polyesters may include those formed by the condensation reaction of aliphatic polyols, including cycloaliphatic polyols, with aliphatic and/or aromatic polycarboxylic acids and anhydrides. Examples of suitable aliphatic polyols may include 1,2-ethanediol, 1,3-propanediol, 1,4-butanediol, 1,6-hexanediol, neopentyl glycol, cyclohexane dimethanol, and trimethlyopropane. Examples of suitable polycarboxylic acids and anhydrides may include succinic acid, adipic acid, azelaic acid, sebacic acid, terephthalic acid, isophthalic acid, tetrahydrophthalic acid, hexahydrophthalic acid, trimellitic acid, and anhydrides of such acids. The flexibilizer, if needed, may be present up to 50 %, preferably, from 2% to 30% by weight in the composition. Pigments may be added to give the powder coatings color. Examples of pigments include, but are not limited to, titanium dioxide, carbon black, and organic and inorganic pigments of any available color depending on the application. Special effects additives to produce appearances such as veins, wrinkles, and the like may also be added. The amounts of these additional additives depend upon the particular properties of the final coating desired.

The powder coating compositions of the invention may be prepared by conventional techniques employed in the powder coating art. Typically, the components of the powder coating composition are combined and thoroughly blended together and then, melt blended and extruded in a single screw or twin screw extruder. The extrudate is immediately cooled and then is ground in a mill, such as a Brinkman mill, a Bantam hammer mill, an Alpine Mill or an ACM Mill, and sieved to obtain a powder of appropriate particle size depending on the application. Although a wide range of the particle sizes is useful for the purpose of the invention, typically, the average particle size is about 5 to about 250 micron (µm). Preferably, the average particle size of the powder coating composition of the invention is from about 10 microns (µm) to about 80 microns (µm), and more preferably, from about 20 to 40 microns (µm).

Although a wide range of the particle sizes is useful for the purpose of the invention, typically, the average particle size of the powder coating composition of the invention is from 5 microns (µm) to 250 microns (µm). Preferably, the average particle size is from 10 microns (µm) to 80 microns (µm), and more preferably, from 20 microns (µm) to 55 microns (µm).

The powder coating compositions of the invention can be applied onto at least one of the surfaces of a substrate using any conventional powder coating deposition technique, such as electrostatic spray, to obtain smooth and uniform coatings. Curing is achieved by heating the coated substrate at a temperature for a time sufficient to cure the composition. By addition of the catalyst(s), the cure temperature of the powder coating compositions of the invention can be adjusted to either a low temperature or a high temperature for a short time. Both the low cure temperature or higher temperature for a shorter cure time limit the substrate heat exposure, thereby diminishing the outgassing from the wood substrates that could degrade or damage the substrate integrity as well as the continuous uniformity of the final finish. Preferably, the cure temperature of the powder coating compositions of the invention is either at 300° F [148.9°C] or below, more preferably, at 280° F [137.8°C] or below. The cure time varies depending on the cure temperature, the nature and the thickness of the substrate. The cure time may be shorter than 30 minutes, more preferably, shorter than 20 minutes.

The thickness of the cured coatings of the invention varies depending on the application and performance requirements, but preferably, ranging from 1.5 mil to 8.0 mil, [38.1 to 203.2 µm].

The powder coating compositions of the invention may be applied to various conventional substrates such as metals, e.g., steel, or aluminum; glass; ceramic; carbon-fiber; and graphite. Particularly, the powder coating compositions of the invention can be applied to heat sensitive substrates such as plastic or fiber-reinforced plastic substrates, and especially wood substrates.

Typically, the lower the cure temperature and/or the shorter the cure time are, the more difficult it is to achieve high performance. Likewise, the lower the cure temperature and/or the shorter the cure time are, the more difficult it is to control gloss, especially to achieve aesthetically desired low gloss. Further, the lower the cure temperature and/or the shorter the cure time are, the more difficult it is to process the powder coatings as traditional process temperatures are in the same range as the targeted cure temperatures. Achieving high performance coatings as defined by toughness and durability tests like hardness, scratch, mar, chemical resistance and impact can be challenging with traditional coating powders cured at high temperatures. Again the challenge becomes greater as the cure temperature is lowered or the cure time is shortened.

Surprisingly, the powder coating compositions of the invention can be formulated to provide the coated surface of the articles with the desired high performance and other characteristics while cured at a low temperature or a higher temperature for a shorter period of time. For instance, the powder coating compositions of the invention can be formulated to provide finishes with a wide range of 60° gloss, either high or low, depending on the application. Surprisingly, by dry-blending the components of the composition, the adjustment of the gloss becomes much easier. For aesthetically desired low gloss, the powder coating compositions of the invention can be formulated, such as by selecting the resins with low compatibility or by preparing the composition using dry blending technique, to provide coatings with controllable 60° gloss of from 5 to 60, preferably, from 10 to 40.

Further, the powder coating compositions of the invention can be formulated to provide finishes with varied hardness, depending on the application, such as by changing the degree of cross-linking density, or the degree of cure, or by selecting resins having different glass transition temperatures (Tgs). For example, when high hardness such as that measured by pencil hardness is desired, the powder coating compositions of the invention can be formulated using resin(s) with an increased Tg, or formulated to increase the crosslinking density or the degree of cure. Alternatively, increasing the cure time at low cure temperature or increasing the cure temperature can increase the degree of cure. Typically, the composition of the invention can be formulated to provide coatings with pencil hardness of no less than 2H, and preferably, no less than 3H, depending on the application.

In addition, the powder coating compositions of the invention can be formulated to provide coatings on substrates, especially engineered wood substrates, with aesthetically acceptable smooth appearance as well as orange peel or textured appearance depending on the application. For example, by incorporating small amounts of crystalline polyepoxy resin(s) into the composition, the smoothness of the finish obtained can be improved. In addition, the process window is significantly widened.

In yet another aspect, the invention provides an article comprising a heat sensitive substrate coated on at least one of the surfaces of the substrate with any of the aforesaid new powder coating compositions and cured either at a low cure temperature or a higher cure temperature for shorter time to produce a decorative and/or protective finish with controllable gloss, especially aesthetically desired low gloss and/or very high hardness.

Particularly, the article of the invention comprises a heat sensitive substrate, especially wood substrate, coated on at least one of the surfaces of the substrate with any of the aforesaid new powder coating compositions and cured at a low cure temperature of 300° F [148.9°C] or below. for a shorter period of time to produce a decorative and/or protective finish with 60° gloss of from 2 to 95, preferably, from 5 to . 60, and more preferably, from 10 to 40, and pencil hardness of no less than 3H.

The invention is further illustrated by the following non-limiting examples. It should be understood, however, that many variations and modifications may be made while remaining within the scope of the present invention. All components are measured as parts. All the parts, ratios, and percentages specified herein are by weight unless otherwise stated.

### Detailed Description of the Embodiments of the Invention

### Testing Method:

### Gloss

The gloss of the cured powder coating of the invention is measured according to the Standard Test Method for Specular Gloss of ASTM D523.

### Pencil Hardness

The pencil hardness of the cured powder coating of the invention is measured according to the Standard Test Method for Film Hardness by Pencil Test of ASTM D3363.

### MEK resistance

The MEK resistance of the cured powder coating of the invention is measured according to the Standard Test Method for Measuring MEK Resistance by Solvent Rub of ASTM (Test Method) D4752-98.

### Examples

### Reference Example 1

A powder coating composition was prepared by pre-mixing 5.0 parts SCX 843 (acid functional acrylic resin, S.C. Johnson, WI), 48.5 parts YD012 (polyepoxy resin, KUKDO Chemical Ind. Co., Ltd. Seoul, Korea), 3.7 parts by weight PT810 (TGIC, Vantico), 47.8 parts GMA 300 (epoxy functional acrylic resin, Estron Chemical Company, CT), 2.5 parts 2-phenyl-2-imidazoline/dodecanedioic acid disalt, 1.2 parts 2-phenyl-imidazole, and 1.5 parts Resiflow P-67 (acrylic resin, flow additive). The mixture was then melt blended in a twin-screw extruder at 500 rpm, extruded, cooled, grounded and then sieved through a 100 mesh 150 µm sieve to obtain coating powders.

Using an electrostatic spray coating method, the above-prepared coating powders were then applied onto a medium density fiberboard and cured in an oven at 275° F [135.0°C] for 10 minutes. The 60° gloss, pencil hardness and MEK resistance of the cured powder coating were tested and the test results are shown in Table I.

### Reference Example 2

A powder coating composition was prepared according to Example 1, except that 10.0 parts SCX 843 was used. The 60° gloss, pencil hardness and MEK resistance of the cured powder coating were tested and the test results are shown in Table **I.**

### Reference Example 3

A powder coating composition was prepared according to Example 1, except that 15.0 parts SCX 843 was used. The 60° gloss, pencil hardness and MEK resistance of the cured powder coating were tested and the test results are shown in Table I.

### Reference Example 4

A powder coating composition was prepared according to Example 1; except that 20.0 parts SCX 843 was used. The 60° gloss, pencil hardness and MEK resistance of the cured powder coating were tested and the test results are shown in Table I.

### Reference Example 5

A powder coating composition was prepared according to Example 1, except that 25.0 parts SCX 843 was used. The 60 "gloss, pencil hardness and MEK resistance of the cured powder coating were tested and the test results are shown in Table I.

**Table I**

| Ex. No. | Gloss at 60° | Pencil Hardness | MEK Resistance |
|---|---|---|---|
| 1 | 78 | 5H | Pass |
| 2 | 67 | 5H | Pass |
| 3 | 34 | 5H | Pass |
| 4 | 20 | 5H | Pass |
| 5 | 12.7 | 6H | Pass |

### Reference Examples 6-10

Powder coating compositions were prepared according to Example 1, except that 5.0 parts, 10.0 parts, 15.0 parts and 25.0 parts SCX 848 was used, respectively, in each example. The 60 °gloss, pencil hardness and MEK resistance of the cured powder coating were tested and the test results are shown in Table II.

**Table II**

| Ex. No. | Gloss at 60° | Pencil Hardness | MEK Resistance |
|---|---|---|---|
| 6 | 65 | 5H | Pass |
| 7 | 33 | 5H | Pass |
| 8 | 25 | 5H | Pass |
| 9 | 11.4 | 5H | Pass |
| 10 | 10.6 | 5H | Pass |

### Example 11

A powder coating composition was prepared by pre-mixing 14.4 parts SCX 848, 85.6 parts YD012, 1.0 parts 2-methyl-imidazole, 1.5 parts Resiflow P-67 and 25 parts RCL-2 (white pigment). The mixture was then melt blended in a twin-screw extruder at 500 rpm, extruded, cooled, grounded and then sieved through 100 mesh sieve to obtain coating powders.

Using an electrostatic spray coating method, the above-prepared coating powders were then applied onto a medium density fiberboard and cured in an oven at 280° F [137.8°C] for 15 minutes. The 60 °gloss, pencil hardness and MEK resistance of the cured powder coating were tested and the test results are shown in Table III.

### Reference Example 12

A powder coating composition was prepared according to Example 11, except that 15.6 parts SCX 848, 31.8 parts SCX 822, 52.6 parts GT7220 (Novolac epoxy resin, Vantico), 1.25 parts 2-phenyl-imidazoline, 1.5 parts Modaflow 2000 and 30 parts RCL-2 were pre-mixed. The coated medium density fiberboard was cured in an oven at 275° F [135.0°C] for about 10 minutes. The 60° gloss and MEK resistance of the cured powder coating were tested and the test results are shown in Table III.

### Example 13

A powder coating composition was prepared according to Example 12, except that 28.0 parts SCX 843, 72.0 parts GT7220, 1.5 parts 2-phenyl-imidazoline, 1.5 parts Modaflow 2000 and 30 parts RCL-2 were pre-mixed. The 60° gloss and MEK resistance of the cured powder coating were tested and the test results are shown in Table III.

### Example 14

A powder coating composition was prepared according to Example 12, except that 28.7 parts by weight SCX 848, 71.3 parts by weight YD012, 2.0 parts 2-phenyl-imidazole,1.5 parts Modaflow 2000 and 1.0 parts BP120 (carbon black pigment) were pre-mixed. The 60° gloss and MEK resistance of the cured powder coating were tested and the test results are shown in Table III.

### Reference Example 15

A powder coating composition was prepared according to Example 12, except that 41.1 parts SCX 848, 51.0 parts YD012, 7.7 parts TGIC, 2.5 parts 2-phenyl-2-imidazoline/dodecanedioic acid disalt, 1.5 parts Modaflow 2000, 1.0 parts Lanco 1780 (wax) and 1.0 parts Taber Tiger 5512 (abrasion resistant additive) were pre-mixed. The 60° gloss and MEK resistance of the cured powder coating were tested and the test results are shown in Table III.

**Table III**

| Ex. No. | Gloss at 60° | Pencil Hardness | MEK Resistance |
|---|---|---|---|
| 11 | 30 | 3H | Pass |
| 12 | 29 | - | Pass |
| 13 | 11 | - | Pass |
| 14 | 9 | - | Pass |
| 15 | 2 | - | Pass |

### Reference Example 16

A powder coating composition was prepared by pre-mixing 19.0 parts SCX 848, 39.3 parts YD012, 3.0 parts PT-810, 38.7 parts GMA 300, 0.5 parts 2-phenyl-2-imidazolineldodecandioic acid disalt 2.0 parts 2-phenyl-imidazole, 1.5 parts Resiflow P-67 and 30 parts RCL-2. The mixture was then melt blended in a twin-screw extruder at 500 rpm, extruded, cooled, grounded and then sieved through a 100 mesh [150 µm] sieve to obtain coating powders.

Using an electrostatic spray coating method, the above-prepared coating powders were then applied onto a medium density fiberboard and cured in an oven at a 280° F [137.8°C] for 15 minutes. The 60° gloss, pencil hardness and MEK resistance of the cured powder coating were tested and the test results are shown in Table IV.

### Reference Example 17

A powder coating composition was prepared according to Example 16, except that 1.0 parts 2-phenyt-2-imidazoline/dodecandioic acid disalt was used. The 60° gloss, pencil hardness and MEK resistance of the cured powder coating were tested and the test results are shown in Table IV. Reference Example 18

A powder coating composition was prepared according to Example 16, except that 2.0 parts 2-phenyl-2-imidazoline/dodecandioic acid disalt was used. The 60° gloss, pencil hardness and MEK resistance of the cured powder coating were tested and the test results are shown in Table IV.

### Reference Example 19

A powder coating composition was prepared according to Example 18, except that 1.0 parts 2-phenyl-imidazole was used. The 60° gloss, pencil hardness and MEK resistance of the cured powder coating were tested and the test results are shown in Table IV.

### Reference Example 20

A powder coating composition was prepared according to Example 19, except that no PT-81 0 was used. The 60° gloss, pencil hardness and MEK resistance of the cured powder coating were tested and the test results are shown in Table IV.

### Reference Example 21

A powder coating composition was prepared according to Example 19, except that 1.0 parts PT-810 was used. The 60° gloss, pencil hardness and MEK resistance of the cured powder coating were tested and the test results are shown in Table IV.

**Table IV**

| Ex. No. | Gloss at 60° | Pencil Hardness | MEK Resistance |
|---|---|---|---|
| 16 | 52 | 3H | Pass |
| 17 | 41 | 3H | Pass |
| 18 | 25 | 3H | Pass |
| 19 | 15 | 4-5H | Pass |
| 20 | 10 | 7H | Pass |
| 21 | 6.5 | 9H | Pass |

### Example 22

A powder coating composition was prepared by pre-mixing 28.7 parts SCX 848, 71.3 parts YD012, 2.0 parts 2-phenyl-imidazole, 1.0 parts Lanco 1780, 1.0 parts Taber Tiger 5512 (wax), 1.0 parts Ultranox 626 (antioxidant) and 30 parts RCL-2. The mixture was then melt blended in a twin-screw extruder at 500 rpm, extruded, cooled, grounded and then sieved through a 100 mesh [150 µm] sieve to obtain coating powders.

Using an electrostatic spray coating method, the above-prepared coating powders were then applied onto a medium density fiberboard and cured in an oven at 275° F [135.0°C] for 10 minutes. The 60° gloss, pencil hardness and MEK resistance of the cured powder coating were tested and the test results are shown in Table V.

### Reference Example 23

A powder coating composition was prepared by pre-mixing 83.8 parts SCX 835, 16.5 parts Epo-Thoto YDCN-500-90P (o-cresol novolac epoxy resin), 2.2 parts 2-phenyl-imidazole, 1.5 parts Modarez MFP A-25-P (flow control additive, Synthron Inc., Morganton, WC), 0.29 parts Cab-O-Sil CT111 G (fumed silica, Cabot Corp, Tuscola, IL), and 30 parts RCL-2. The mixture was then melt blended in a twin-screw extruder at 500 rpm, extruded, cooled, grounded and then sieved through a 100 mesh 150 µm sieve to obtain coating powders.

Using an electrostatic spray coating method, the above-prepared coating powders were then applied onto a medium density fiberboard and cured in an oven at 275° F [135.0°C] for 10 minutes. The 60° gloss, pencil hardness and MEK resistance of the cured powder coating were tested and the test results are shown in Table V.

**Table V**

| Ex. No. | Gloss at 60° | Pencil Hardness | MEK Resistance |
|---|---|---|---|
| 22 | 15 | 4H | Pass |
| 23 | 70 | F | Pass |

### Reference Examples 24 and 25

Powder coating compositions were prepared by pre-mixing 46.3 parts Epo-Thoto YD-012, 28.7 parts GMA 300, 10.0 parts Uniplex 280 (sucrose benzoate), 1.5 parts Resiflow P-67, 1.5 parts 2-phenylimidazole, and 30 parts of RCL-2. The mixture was then melt blended in a twin-screw extruder at 500 rpm, cooled, ground and sieved through a 100 mesh [150 µm] sieve to obtain the component (A).

A premix of 100 parts of SCX 843, 30 parts of RCL-2 and 30 parts of Nyad 325 (wollastonite) was melt blended in a twin-screw extruder at 500 rpm, cooled, ground and sieved through a 140 mesh [106 µm] sieve to obtain the component (B).

Then the component (A) and component (B) were dry-blended at a w/w ratio of 100/10 and 100/15, respectively, to obtain two powder coating compositions.

Using an electrostatic spray coating method, the above-prepared coating powders were applied onto medium density fiberboard and cured in an oven at a part temperature of 350° F [176.7°C] for 3 minutes. The 60° gloss, pencil hardness and MEK resistance of the cured powder coatings were tested and the test results are shown in Table VI.

### Reference Example 26

A powder coating composition was prepared by pre-mixing 62.3 parts Epo-Thoto YD-012, 5.2 parts EPO-THOTO YDC-1312, 20.5 parts GMA 300, 12.0 parts SCX 843, 2.0 parts DYHARD PI, 1.0 part Resinflow P-67, 30 parts RCL-2 and 0.266 parts Aluminum Oxide C. The mixture was then melt blended in a twin-screw extruder at 500 rpm, extruded, cooled, ground and then sieved through a 140 mesh [106 µm] sieve to obtain coating powders.

Using an electrostatic spray coating method, the above-prepared coating powders were then applied onto a medium density fiberboard and cured in an oven at a part temperature of 350° F [176 °C] for about 3 minutes. The 60° gloss, pencil hardness and MEK resistance of the cured powder coating were tested and the test results are shown in Table VI.

### Reference Example 27

A Powder coating was prepared according to Example 26, except that Epoxy Research Resin RSS-1407 was used instead of EPO-THOTO YDC-1312.

The 60° gloss, pencil hardness and MEK resistance of the cured powder coating were tested and the test results are shown in Table VI.

**Table VI**

| Ex. No. | Gloss at 60° | Pencil Hardness | MEK Resistance |
|---|---|---|---|
| 24 | 33 | 7H | pass |
| 25 | 7 | 9H | pass |
| 26 | 25 | H | pass |
| 27 | 40 | 2H | pass |

## Claims

1. A powder coating composition comprising:
a) 10% to 40% by weight, relative to (a) plus (b), of carboxylic acid functional acrylic resin(s);
b) 60% to 90% by weight, relative to (a) plus (b), of polyepoxy resin(s); and
c) a catalyst in an amount sufficient to cure the composition at a temperature of 300° F (148.9°C) or below for 30 minutes or less, wherein the composition provides a finish having a pencil hardness of at least 3H.

2. The powder coating composition of claim 1, wherein the catalyst is selected from the group consisting of imidazoles, imidazole/epoxy adducts, tertiary amines, imidazolines, imidazoline salts of mono- or di-carboxylic acids, tetraalkylammonium salts, phosphonium salts, and mixtures thereof.

3. The powder coating composition of any of claims 1-2, wherein the composition provides a coating having 60° gloss of from 2 to 95.

4. The powder coating composition of any of claims 1-3, wherein the composition provides a coating having 60° gloss of from 5 to 60.

5. The powder coating composition of any of claims 1-4, wherein the composition provides a coating with 60° gloss of from 10 to 40.

6. A powder coating composition of any of claims 1-5, further comprising a flexibilizing agent.

7. The powder coating composition of claim 6, wherein the flexibilizing agent is selected from a group consisting of solid plasticizers, polyester, rubber, styrene maleic anhydride and polyanhydride resins.

8. The powder coating composition of any of claims 1-7, wherein the catalyst is selected from 2-phenyl-imidazole, 2-methyl-imidazole, 2-phenylimidazoline, a salt of 2-phenyl-2-imidazolinone and dodecanedioic acid, and mixtures thereof.

9. An article comprising a heat sensitive substrate, and coated and cured on at least one surface of the substrate with a powder coating composition of any of claims 1-8.

10. The article of claim 9, wherein the heat sensitive substrate is a wood substrate or a plastic substrate.

## Patentansprüche

1. Eine Pulverbeschichtungszusammensetzung mit
a) 10 bis 40 Gew.-%, bezogen auf (a) plus (b), Acrylharz(en) mit Carbonsäurefunktion,
b) 60 bis 90 Gew.-%, bezogen auf (a) plus (b), Polyepoxyharz(en) und
c) einem Katalysator in einer zur Härtung der Zusammensetzung bei einer Temperatur von 300°F (148,9°C) oder darunter in 30 Minuten oder weniger ausreichenden Menge, wobei die Zusammensetzung eine Deckschicht mit einer Bleistifthärte von wenigstens 3H ergibt.

2. Die Pulverbeschichtungszusammensetzung des Anspruchs 1, bei der der Katalysator aus der aus Imidazolen, Imidazol/Epoxy-Addukten, tertiären Aminen, Imidazolinen, Imidazolinsalzen von Mono- oder Dicarbonsäuren, Tetraalkylammoniumsalzen, Phosphoniumsalzen und deren Gemischen bestehenden Gruppe ausgewählt ist.

3. Die Pulverbeschichtungszusammensetzung eines der Ansprüche 1 bis 2, bei der die Zusammensetzung eine Beschichtung mit Glanz bei 60° von 2 bis 95 ergibt.

4. Die Pulverbeschichtungszusammensetzung eines der Ansprüche 1 bis 3, bei der die Zusammensetzung eine Beschichtung mit Glanz bei 60° von 5 bis 60 ergibt.

5. Die Pulverbeschichtungszusammensetzung eines der Ansprüche 1 bis 4, bei der die Zusammensetzung eine Beschichtung mit Glanz bei 60° von 10 bis 40 ergibt.

6. Die Pulverbeschichtungszusammensetzung eines der Ansprüche 1 bis 5, ferner mit einem Flexibilisierungsmittel.

7. Die Pulverbeschichtungszusammensetzung des Anspruchs 6, bei der das Flexibilisieruigsuittel aus der aus festen Weichmachern, Polyester, Gummi, Styrol-Maleiosäureanhydrid-Harzen und -polyanhydrid-Harzen bestehenden Gruppe ausgewählt ist.

8. Die Pulverbeschichtungszusammensetzung eines der Ansprüche 1 bis 7, bei der der Katalysator unter 2-Phenyl-imidazol, 2-Methylimidazol, 2-Phenylimidazolin, einem Salz von 2-Phenyl-2-imidazolinon und Dodecandicarbonsäure und deren Gemischen ausgewählt ist.

9. Ein Gegenstand mit einem hitzeempfindlichen Substrat, das auf wenigstens einer Oberfläche mit einer Pulverbeschichtungszusammensetzung eines der Anspruche 1 bis 8 beschichtet und gehärtet ist.

10. Der Gegenstand des Anspruchs 9, bei dem das hitzeempfindliche Substrat ein Holzsubstrat oder ein Kunststoffsubstrat ist.

## Revendications

1. Composition de revêtement en poudre comprenant :
a) 10 % à 40 % en poids, par rapport à (a) plus (b), de résine(s) acrylique(s) à fonctionnalité acide carboxylique ;
b) 60 % à 90 % en poids, par rapport à (a) plus (b), de résine(s) poly(époxy) ; et
c) un catalyseur dans une quantité suffisante pour vulcaniser la composition à une température de 148,9 °C (300°F) ou moins pendant 30 minutes ou moins, où la composition donne un fini ayant une dureté au crayon d'au moins 3 H.

2. Composition de revêtement en poudre selon la revendication 1, dans laquelle le catalyseur est choisi dans le groupe consistant en les imidazoles, les produits d'addition imîdazole/époxy, les amines tertiaires, les imidazolines, les sels d'imidazoline d'acides mono- ou di-carboxyliques, les sels de tétraalkylammonium, les sels de phosphonium et leurs mélanges.

3. Composition de revêtement en poudre selon l'une quelconque des revendications 1 et 2, dans laquelle la composition forme un revêtement ayant un braillant à 60° de 2 à 95.

4. Composition de revêtement en poudre selon l'une quelconque des revendications 1 à 3, dans laquelle la composition forme un revêtement ayant un brillant à 60° de 5 à 60.

5. Composition de revêtement en poudre selon l'une quelconque des revendications 1 à 4, dans laquelle la composition forme un revêtement ayant un brillant à 60° de 10 à 40.

6. Composition de revêtement en poudre selon l'une quelconque des revendications 1 à 5, comprenant en outre un agent flexibilisant.

7. Composition de revêtement en poudre selon la revendication 6, dans laquelle l'agent flexibilisant est choisi dans un groupe consistant en les plastifiants solides, le poly(ester), le caoutchouc, les résines de styrène-anhydride maléfique et de poly(anhydride).

8. Composition de revêtement en poudre selon l'une quelconque des revendications 1 à 7, dans laquelle le catalyseur est choisi parmi le 2-phényl-imidazole, le 2-méthylimidazole, la 2-phénylimidazoline, un sel de 2-phényl-2-imidazolinone et d'acide dodécanedioïque, et leurs mélanges.

9. Article comprenant un substrat thermosensible, et revêtu et vulcanisé sur au moins une surface du substrat avec une composition de revêtement en poudre selon l'une quelconque des revendications 1 à 8.

10. Article selon la revendication 9, dans lequel le substrat thermosensible est un substrat en bois ou un substrat en plastique.
